# EUROPEAN PATENT APPLICATION

(11) **EP 0 776 781 A2**
(43) Date of publication of application: **04.06.1997**
(21) Application number: 96117515.5
(22) Date of filing: 31.10.1996
(51) Int. Cl.: B60N 2/22

(54) **Seat reclining device**

(30) Priority: 31.10.1995 JP 283655/95
(71) Applicant: FUJIKIKO KABUSHIKI KAISHA, Tokyo (JP)
(72) Inventor: Nakamura, Shinya, Kosai-shi, Shizuoka-ken (JP); Okamoto, Kiyotaka, Kosai-shi, Shizuoka-ken (JP)
(74) Representative: Viering, Jentschura & Partner

(57) **Abstract**

In the seat reclining device (E) of the invention, the working mechanism (50) is composed of a cam member operating lever (51) having a base portion supported rotatably on the base plate (10), and the free end side being coupled with the cam member (40) through a coupling pin (42), biased in the locking direction by a first biasing mechanism and an unlocking lever (52) having the base portion rotatably supported by the same shaft (56) as the cam member operating lever (51), and the intermediate portion provided with a pinhole (52a) for freely fitting a coupling pin (42), biased in the locking direction by a second biasing mechanism, and the manipulating mechanism (60) is composed of a wire (62) having one end coupled to the unlocking lever (52) and the other end to the unlocking lever knob (61) provided in the upper part of the seat back side (71), and therefore the seat back (71) can be locked in the initial stage at the rear inclined position from the lock free state, completely regardless of the inertial force of the unlocking lever knob (61) and the sliding resistance of the wire (62).

## Description

### BACKGROUND OF THE INVENTION

The present invention relates to a seat reclining device, and more particularly to a latch type seat reclining device provided in a rear seat for vehicle.

A conventional seat reclining device of rear seat for vehicle comprises a base plate, upper teeth member, lower teeth member, a cam member, a cam member operating lever, an unlocking lever, and a wire. The base plate is provided on the floor side of the vehicle. The upper teeth member are supported rotatably on the base plate, and are provided at the seat back side. At the lower edge of the upper teeth member, toothed portions are provided at two positions on both sides of a toothless portion. The lower teeth member are rotatably supported on the base plate, and have a toothed portion detachably engaged with the toothed portions of the upper teeth member. The cam member is rotatably supported on the base plate, engaged with the lower teeth member, so as to hold the lower teeth member in the locked state and unlocked state. The intermediate portion of the cam member operating lever is linked to the cam member through a coupling pin. The base portion of the cam member operating lever is rotatably supported on the base plate, and is biased to rotate in the locking direction (clockwise direction) by a tension spring. The wire couples the free end side of the cam member operating lever and the unlocking lever knob provided in the seat back side upper part.

In the locked state, the toothed portion of the lower teeth member is engaged with the toothed portion of the upper teeth member, and hence the seat back is locked in the rear inclined position.

By manipulating the unlocking lever knob from the locked state to pull the wire upward by resisting the spring force of the tension spring, the cam member operating lever is turned in the counterclockwise direction, and the cam member rotates in the clockwise direction by resisting the coupling pin, and the cam portion of the cam member is engaged with a recess formed in the lower teeth member. In consequence, the lower teeth member rotate in the counterclockwise direction, and this toothed portion is dissociated from the toothed portion of the upper teeth member to be in unlocked state. In this unlocked state, after rotating the upper teeth member to a desired position, when the unlocking lever knob is released, the cam member rotates in the clockwise direction by the spring force of the tension spring, and the lower teeth member is rotated in the clockwise direction by the cam portion, so that the toothed portion of the lower teeth member is engaged with the toothed portion of the upper teeth member. Hence, the seat back can be locked in a desired position.

In the lock free state, the toothed portion of the lower teeth member is contact with the toothless portion of the upper teeth member. By rotating the upper teeth member in the clockwise direction from the lock free state, when the toothed portion of the upper teeth member reaches the position confronting the toothed portion of the lower teeth member, the lower teeth member is rotated in the clockwise direction through the cam member by the spring force of the tension spring, and the toothed portion of the lower teeth member is engaged with the toothed portion of the upper teeth member, so that the seat back can be locked in an initial state at a rear inclined position.

In such seat device, however, in the process of locking the seat back in the initial stage from the lock free state to the rear inclined position, the rotating speed of the cam member operating lever (the rotating speed of the cam member) becomes slow due to inertial force of the unlocking lever knob and the sliding resistance of wire layout, and the toothed portion of the lower teeth member cooperating with the cam member operating lever cannot follow up the rotating speed of the upper teeth member (delayed), and the both toothed portions are not engaged with each other, possibly locking in a rear inclination from the initial lock position.

Thus, when locking the seat back in the initial stage at the rear inclined position from the lock free state, if tooth skipping occurs, fluctuations occur in the initial stage lock position of the seat back, and the rear inclined position is different in every lock in initial stage, which is not preferred for the controllability.

### SUMMARY OF THE INVENTION

The invention is hence devised to solve the problems of the conventional seat reclining device, and it is an object thereof to provide a seat reclining device capable of locking the seat back at the specific rear inclined position (the initial stage lock position) from the lock free state, always, regardless of the inertial force of unlocking lever knob and sliding resistance of wire.

To achieve the object, the seat reclining device of the invention comprises a base plate fitted to the seat cushion or floor side, an upper teeth member rotatably supported on the base plate, and fitted to the seat back side, and further forming an upper toothed portion at the lower edge, a lower teeth member rotatably supported on the base plate, having a lower toothed portion detatchably engaged with the upper toothed portion, a cam member rotatably supported on the base plate so as to be engaged with the lower teeth member, so that the cam member hold the lower teeth member in locked state and unlocked state, a cam member operating lever having a base portion supported rotatably on the base plate by a mounting shaft, and a free end side being coupled with the cam member through a coupling pin, biased in the locking direction by a first biasing mechanism, an unlocking lever having a base portion rotatably supported by the mounting shaft supporting the cam member operating lever, and an intermediate portion provided with a pinhole for freely fitting a coupling pin, biased in the locking direction by a second biasing mechanism, and a wire for coupling the unlocking lever and unlocking lever knob provided in the upper part of the seat back side.

In such seat reclining device, in the lock free state, the cam member operating lever is biased by the first biasing mechanism so as to rotate in the locking direction, and hence the cam member and lower teeth member are pulled in the locking direction. The unlocking lever is biased by the second biasing mechanism to rotate in the locking direction, and hence the unlocking lever knob and wire are pulled in the locking direction. Therefore, when the seat back is raised from the lock free state and locked at the rear inclined position in the initial stage, the cam member can be powerfully rotated in the locking direction by the first biasing mechanism, being completely free from the inertial force of the unlocking lever knob and sliding resistance of wire. Hence, tooth skipping in locking in the initial stage can be completely prevented, and the seat back can be locked in the initial stage always at a constant rear inclined position (initial stage lock position), so that the controllability may be enhanced.

Incidentally, the second biasing mechanism may be provided in the mounting shaft part of the unlocking lever, and is composed of a torsional coil spring for applying a biasing force always in the locking direction to the unlocking lever.

In such constitution, since the torsional coil spring is used as the second biasing mechanism, the occupied area may be relatively smaller, so as to be preferable for the layout.

### BRIEF DESCRIPTION OF THE DRAWINGS

Fig. 1 is a front sectional view of a seat reclining device embodying to the invention.

Fig. 2 is a perspective view of a seat reclining device.

Fig. 3 is a perspective view of a rear seat for vehicle as seen from the back of the vehicle.

Fig. 4 is a front view of a seat reclining device in an unlocked state.

Fig. 5 is a front view of a seat reclining device in a lock free state.

Fig. 6 is a front view of a seat reclining device in foremost reclined state of seat back.

### DESCRIPTION OF THE PREFERRED EMBODIMENT

This invention will be described in further detail by way of example with reference to the drawings.

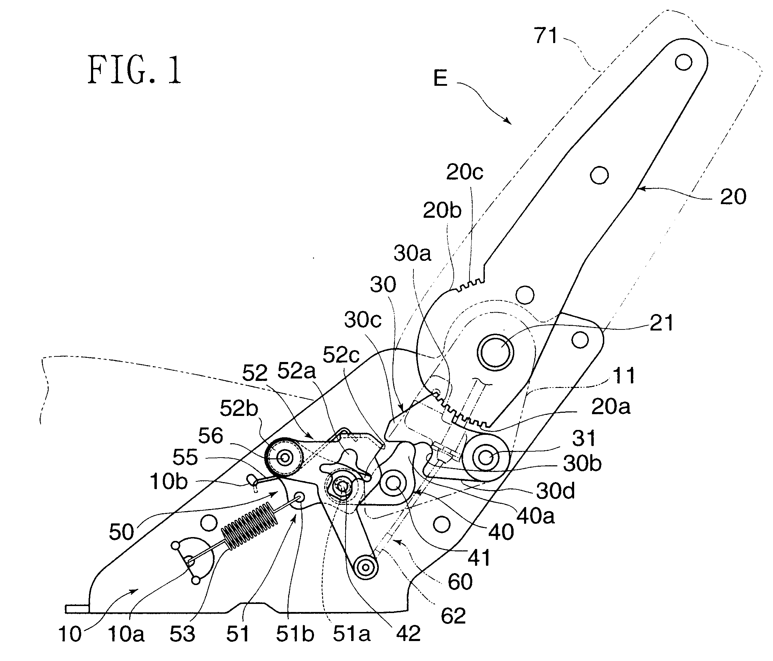

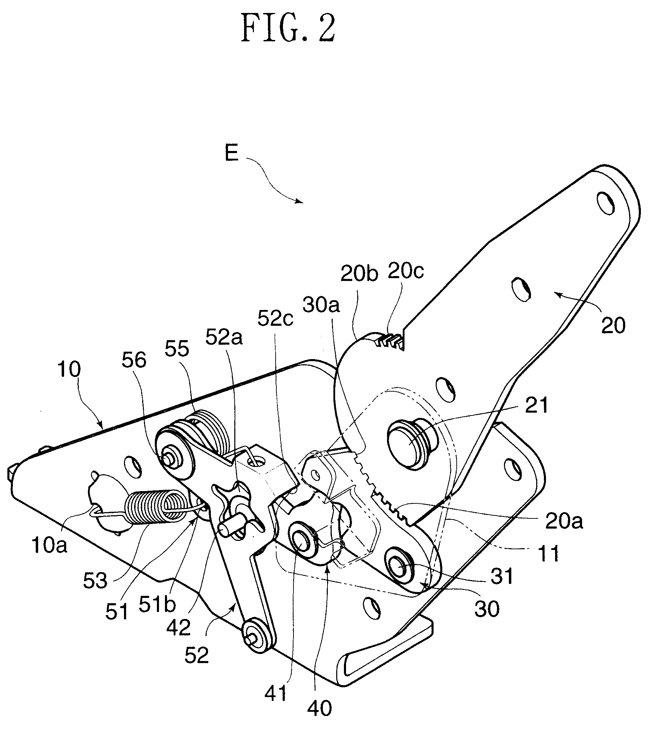

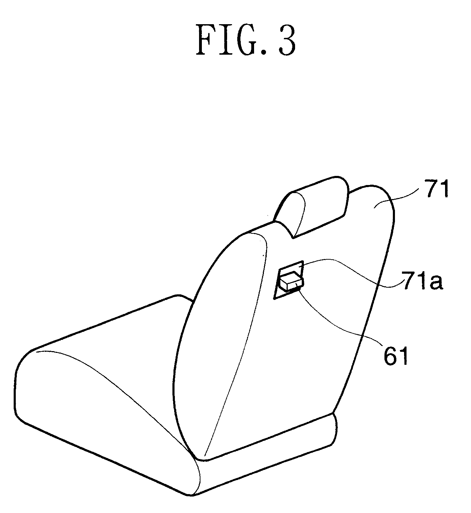

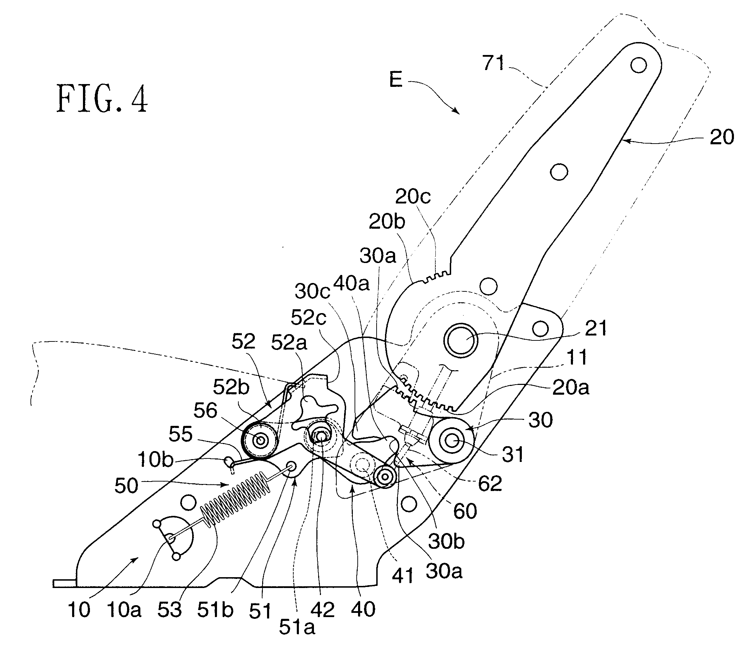

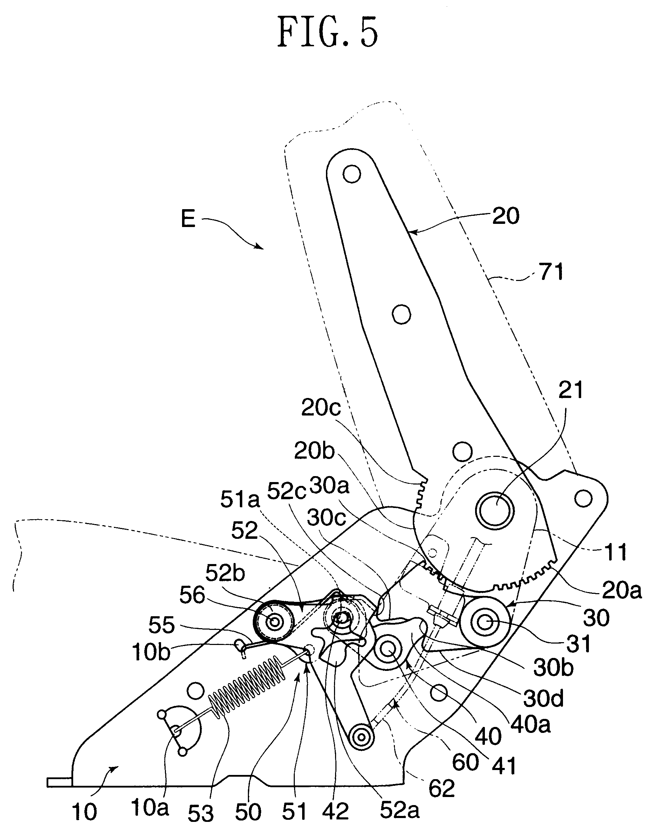

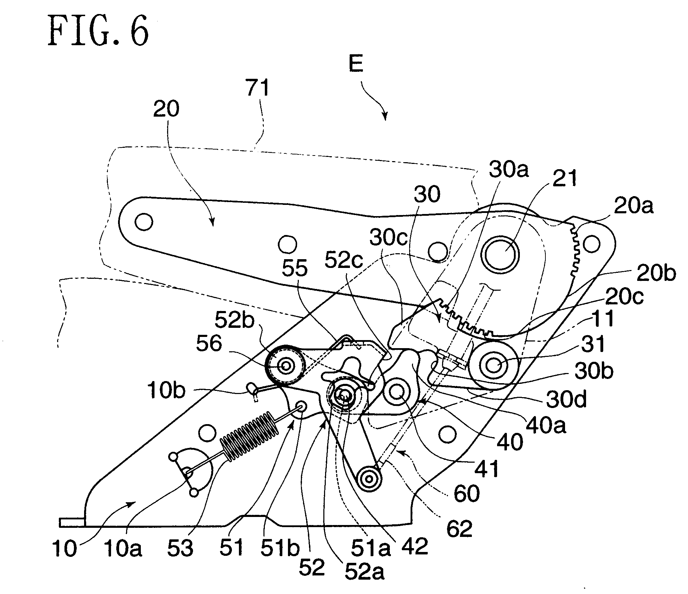

Fig. 1 is a front sectional view of a seat reclining device, Fig. 2 is a perspective view of a seat reclining device, Fig. 3 is a perspective view of a rear seat for vehicle as seen from the back of the vehicle, Fig. 4 is a front view of a seat reclining device in an unlocked state, Fig. 5 is a front view of a seat reclining device in a lock free state, and Fig. 6 is a front view of a seat reclining device in foremost reclined state of seat back.

A seat reclining device E comprises a base plate 10, upper teeth member 20, lower teeth member 30, a cam member 40, a working mechanism 50, and a manipulating mechanism 60.

The base plate 10 is fitted to the floor side (not shown). The upper teeth member 20 are rotatably supported on the base plate 10, and provided at the seat back 71 side. At the lower edge of the upper teeth member 20, toothed portions 20a, 20c are formed. The lower teeth member 30 have a toothed portion 30a detachably engaged with the toothed portions 20a, 20c of the upper teeth member 20, and are rotatably supported on the base plate 10. The cam member 40 is rotatably supported on the base plate 10 so as to be engaged with the lower teeth member 30, so that the cam member 40 holds the lower teeth member 30 in locked state or unlocked state. The working mechanism 50 operates the cam member 40, and the manipulating mechanism 60 manipulates the working mechanism 50.

The working mechanism 50 is composed of a cam member operating lever 51, and an unlocking lever 52. The came member operating lever 51 has its base portion supported rotatably on the base plate 10, its free end side coupled with the cam member 40 through a coupling pin 42, and is entirely biased in the locking direction by a first biasing mechanism. The unlocking lever 52 has its base portion rotatably supported on the same shaft (a mounting shaft 56) as in the cam member operating lever 51, its intermediate portion provided with a pin hole 52a for freely fitting the coupling pin 42, and the free end side coupled to the manipulating mechanism 60, and is entirely biased in the locking direction by a second biasing mechanism.

The manipulating mechanism 60 is composed of an unlocking lever knob 61, and a wire 62. The unlocking lever knob 61 is provided in the upper part at the seat back 71 side. The wire 62 couples the unlocking lever 52 and unlocking lever knob 61.

The first biasing mechanism is composed of a tension spring 53, and the second biasing mechanism is composed of a torsional coil spring 55. The torsional coil spring 55 is provided in the mounting shaft 56 of the unlocking lever 52, and provides the unlocking lever 52 always with a force in the locking direction.

The constitution of the invention is more specifically described below.

The base plate 10 is fixed to the floor side, and the upper teeth member 20 provided at the seat back 71 side are rotatably supported on an upper tooth mounting shaft 21 provided in this base plate 10.

At the lower edge of the upper teeth member 20, an arc form toothed portion (an upper toothed portion) 20a centered around the upper tooth mounting shaft 21, a toothless portion 20b slightly larger in radius of curvature than the upper toothed portion 20a continuously at the left side of the upper toothed portion 20a, and a toothed portion 20c (the other toothed portion) for front inclination stopper continuously to the toothless portion 20b are formed. The toothed portion 20c for front inclination stopper is same in shape with the upper toothed portion 20a, and consists of suitabe numbers of teeth to engage with the toothed portion 30a.

The base portion of the lower teeth member 30 is rotatably supported on a lower tooth mounting shaft 31 provided in the base plate 10. On the upper surface of the free end side of the lower teeth member 30, a lower toothed portion 30a can engage selectively with the toothed portions 20a or 20c of the upper teeth member 20 is formed. On the lower surface of the free end side of the lower teeth member 30, a cam receiver 30c and a bulge 30d are formed on right and left side of a recess 30b.

The base portion of the cam member 40 is rotatably supported on a cam member mounting shaft 41 provided in the base plate 10. At one free end side of the cam member 40, a cam portion 40a to be engaged with the cam receiver 30c and bulge 30d of the lower teeth member 30 is formed, and a coupling pin 42 is provided at other free end side.

The upper tooth mounting shaft 21, lower tooth mounting shaft 31, and cam member mounting shaft 41 are provided with holder plates 11 for holding the upper teeth member 20, lower teeth member 30, and cam member 40.

The base portion of the cam member operating lever 51 is rotatably supported on the mounting shaft 56 provided in the base plate 10. A coupling hole 51a is formed at the free end side of the cam member operating lever 51, and a coupling pin 42 of the cam member 40 is inserted in this coupling hole 51a. And the coupling hole 51a is formed into a ellipse shape so as to permit the cam member 40 and the unlocking lever 52 to work pivotally. Both ends of the tension spring 53 as a first biasing mechanism are connected to a stopping hole 51b of the cam member operating lever 51 and a stopping portion 10a formed in the base plate 10. By the spring force of this tension spring 53, the cam member operating lever 51 is biased so as to rotate in the clockwise direction on the whole, and the cam member 40 is biased to rotate in the counterclockwise direction (the locking direction) through the coupling pin 42.

The base portion of the unlocking lever 52 is rotatably supported on the mounting shaft 56 supporting the cam member operating lever 51. In the intermediate position of the unlocking lever 52, a cross pin hole 52a is formed, and the coupling pin 42 is freely fitted in this pin hole 52a. On a boss 52b formed around the mounting shaft 56 of the unlocking lever 52, a torsional coil spring 55 as a second biasing mechanism is wound. One end of the torsional coil spring 55 is connected to the unlocking lever 52 side, and the other end is connected to the stopping hole 10b formed in the base plate 10, and by this torsional coil spring 55, the unlocking lever 52 is biased so as to rotate entirely in the clockwise direction (the locking direction).

An unlocking lever knob 61 is accommodated in a recess 71a formed in the upper part of the seat back 71 side so as to be slidable in the vertical direction. One end side of the wire 62 is connected to the free end side of the unlocking lever 52, and the other end side is connected to an unlocking lever knob 61.

The operation of the invention is described below.

Fig. 1 and Fig. 2 show the locked state of the seat reclining device E, in which the cam portion 40a of the cam member 40 is pressed against the cam receiver 30c of the lower teeth member 30 by the spring force of the tension spring 53, and the lower teeth member 30 rotate in the clockwise direction, and the lower toothed portion 30a is engaged with the upper toothed portion 20a to lock the rotation of the seat back 71.

In this locked state, by the spring force of the torsional coil spring 55, the side wall 52c of the unlocking lever 52 is pressed against the holder plate 11, and the wire 62 is pulled in the downward direction.

To unlock from this locked state of the seat back 71, the unlocking lever knob 61 is pulled upward resisting the both spring forces of the tension spring 53 and torsional coil spring 55. As a result, the unlocking lever 52 is rotated in the counterclockwise direction through the wire 62, and the cam member operating lever 51 rotates in the counterclockwise direction through the coupling pin 42. Along with this rotation, the cam member 40 rotates in the clockwise direction, and as shown in Fig. 4, the cam portion 40a of the cam member 40 is departed from the cam receiver 30c of the lower teeth member 30, contact with the bulge 30d of the lower teeth member 30, and thereby the lower teeth member 30 is rotated in the counterclockwise direction. In consequence, the engagement of the upper toothed portion 20a and lower toothed portion 30a is cleared so as to be in unlocked state as shown in Fig. 4.

In this unlocked state, when the seat back 71 is inclined forward until the confronting position of the toothed portion 30a of the lower teeth member 30 and the toothless portion 20b of the upper teeth member 20 and the unlocking lever knob 61 is released in this state, the unlocking lever 52 rotates in the clockwise direction until the side wall 52c comes contact with the holder plate 11 together with the wire 62 by the spring force of the torsional coil spring 55. The lower teeth member 30 rotate in the clockwise direction through the cam member operating lever 51 and cam member 40 by the spring force of the tension spring 53, and the toothed portion 30a comes contact with the toothless portion 20b of the upper teeth member 20, so as to be in lock free state as shown in Fig. 5.

From the lock free state, when the seat back 71 is tilted to the foremost inclined position, as shown in Fig. 6, the toothed portion 30a of the lower teeth member 30 is engaged with the toothed portion for front inclination stopper 20c of the upper teeth member 20, so that the seat back 71 can be locked in the foremost inclined position.

In case to lock the seat back 71 in the initial stage at the rear inclined position as shown in Fig. 1 from the lock free state shown in Fig. 5, the upper teeth member 20 are rotated in the clockwise direction until the upper toothed portion 20a comes to the position confronting the lower toothed portion 30a. As a result, by the spring force of the tension spring 53, the cam receiver 30c of the lower teeth member 30 is pressed through the cam member operating lever 51 and cam portion 40a of the cam member 40, and the lower teeth member 30 rotate in the clockwise direction, and the lower toothed portion 30a is engaged with the upper toothed portion 20a, so that the seat back 71 can be locked in the initial stage at the rear inclined position.

At this time, by the spring force of the tension spring 53, the lower teeth member 30 are pressed against the upper toothed portion 20a through the cam member operating lever 51 and cam portion 40a of the cam member 40, and the unlocking lever knob 61 and wire 62 are pulled downward by the torsional coil spring 55 through the unlocking lever 52, so that the seat back 71 can be locked in the initial stage at the rear inclined position from the lock free state, completely regardless of the inertial force of the unlocking lever knob 61 and sliding resistance of wire 62. As a result, the cam member 40 can be operated in the locking direction powerfully by the spring force of the tension spring 53, and therefore tooth skipping in locking in the initial stage can be perfectly prevented, and the seat back 71 can be locked always at a specified inclined position (initial stage lock position), so that the controllability is enhanced.

In this embodiment of the invention, the second biasing mechanism is the torsional coil spring 55, and this torsional coil spring 55 is smaller in the area of occupation as compared with the tension spring, so that it is preferable for the layout.

In the embodiment, meanwhile, the base plate 10 is attached to the floor side, but it may be also provided at the seat cushion side.

## Claims

1. A seat reclining device comprising:
a base plate fitted to the seat cushion or floor side,
an upper teeth member rotatably supported on the base plate, and fitted to the seat back side, and further forming an upper toothed portion at the lower edge,
a lower teeth member rotatably supported on the base plate, having a lower toothed portion detatchably engaged with said upper toothed portion,
a cam member rotatably supported on the base plate so as to be engaged with the lower teeth member, so that said cam member hold the lower teeth member in locked state and unlocked state,
a cam member operating lever having a base portion supported rotatably on the base plate by a mounting shaft, and a free end side being coupled with the cam member through a coupling pin, biased in the locking direction by a first biasing mechanism,
an unlocking lever having a base portion rotatably supported by said mounting shaft supporting said cam member operating lever, and an intermediate portion provided with a pinhole for freely fitting a coupling pin, biased in the locking direction by a second biasing mechanism, and
a wire for coupling the unlocking lever and unlocking lever knob provided in the upper part of the seat back side.

2. A seat reclining device as claim 1, wherein said second biasing mechanism is provided in said mounting shaft part of said unlocking lever, and is composed of a torsional coil spring for applying a biasing force always in the locking direction to the unlocking lever.

3. A seat reclining device as claim 1, wherein said upper teeth member has a toothless portion continuously to said upper toothed portion and the other toothed portion continuously to said toothless portion for front inclination stopper, said upper toothed portion and said other toothed portion are formed into a arc centered around a upper tooth mounting shaft supporting said upper tooth member rotatably.
